# FASCICULE DE BREVET EUROPEEN

(11) **EP 0 518 869 B1**
(45) Date de publication et mention de la délivrance du brevet: **21.06.1995**
(21) Numéro de dépôt: 91902714.4
(22) Date de dépôt: 07.01.1991
(51) Int. Cl.: B60C 9/22

(54) **PNEUMATIQUES POUR MOTO**
LUTFREIFEN FÜR MOTORRÄDER
PNEUMATIC TYRE FOR MOTORBIKES

(43) Date de publication de la demande: 23.12.1992
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: DELIAS, Alain, F-63170 Pérignat-les-Sarlièves (FR)
(74) Mandataire: Bauvir, Jacques
(86) Numéro de dépôt international: FR9100006
(87) Numéro de publication internationale: WO9212019

(56) Documents cités:
- EP-A- 0 219 311
- EP-A- 0 280 889
- FR-A- 2 338 813
- GB-A- 944 876
- GB-A- 2 092 963
- GB-A- 2 157 239

## Description

La présente invention se rapporte aux pneumatiques conçus pour équiper les motos.

Le passage à la conception de pneumatique connu sous le nom de "radiale ceinturée" ne s'est opéré, pour les motos, que au cours de la dernière décennie. On a considéré que, comme expliqué dans un article publié dans la revue "Moto Journal", de janvier 1984, un pneumatique à une ou deux nappe(s) de carcasse à 90°, et à une nappe de sommet à O°, constituant une architecture de renforcement simple et dépouillée, pouvait très bien convenir comme pneumatique arrière sur les motos routières, même lourdes et puissantes.

Un tel pneumatique, qui corresponde au préambule de la revendication 1, est connu, par exemple, de GB-A-2 157 239.

Afin d'assurer un bon comportement à une moto routière, il a été proposé par la demande de brevet FR 2 611 599, d'associer, à un tel pneumatique arrière, un pneumatique avant ayant une carcasse radiale et deux nappes de sommet orientées à ± 25° par rapport au plan médian perpendiculaire à l'axe de rotation du pneumatique.

De cette façon connue, on apporte une solution tout à fait satisfaisante pour la plupart des conditions d'utilisation des motos. Cependant, en cas de conduite très rapide, surtout lorsque le pilote impose de fortes accélérations en virage, lorsque les pneumatiques sont encore en carrossage prononcé, le pneumatique arrière offre une motricité insuffisante, liée à une rigidité de dérive faible.

De très nombreuses architectures ont été proposées, sans pour autant offrir d'amélioration notable, car si parfois l'une ou l'autre des propriétés s'en trouve améliorée, c'est au prix d'une dégradation souvent importante d'autres propriétés.

La présente invention vise à obtenir une amélioration importante en motricité, sans remettre en cause les autres performances du pneumatique en service, notamment sans dégrader le comportement sur la route des motos équipées.

Selon l'invention, le pneumatique pour moto comportant une partie centrale incluant la bande de roulement, et deux flancs s'étendant chacun entre une extrémité de la partie centrale et un bourrelet destiné à assurer l'accrochage sur la jante, ladite partie centrale, vue en coupe radiale, formant approximativement un arc de cercle, ledit pneumatique étant renforcé par une carcasse s'étendant d'un bourrelet à l'autre, et par une ceinture disposée dans la partie centrale, entre la carcasse et la bande de roulement, ladite ceinture comportant une ou plusieurs couches de fils orientés sensiblement parallèlement à un plan perpendiculaire à l'axe de rotation et disposés, transversalement, sur toute la largeur de la bande de roulement, est caractérisé en ce que la ceinture est constituée par, outre la ou lesdites couches de fils, et disposées radialement au dessus de celle(s)-ci, un renforcement dont les fils forment un angle α par rapport à un plan perpendiculaire à l'axe de rotation du pneumatique, et un angle - β par rapport audit plan, lesdits angles α et β étant compris entre les valeurs 35° et 55°.

Bien entendu, il faut comprendre par fil aussi bien un fil unitaire que des câbles ou des assemblages équivalents, et ceci quel que soit le matériau utilisé. Une caractéristique spécifique importante de la présente invention est la succession des angles faits par les différentes armatures de renforcement de sommet au sens habituel que l'on attribue à ces angles : O° pour la première nappe de sommet recouvrant la nappe de carcasse approximativement sur une largeur correspondant à la largeur de la bande de roulement, et enfin un renforcement à angles croisés valant 45° ± 10°. Ce renforcement peut être constitué par deux nappes, les fils de l'un étant orientés selon l'angle α, et les fils de la suivante étant orientés selon l'angle - β. Ou bien encore, le renforcement est constitué par une nappe de tissu croisé dans laquelle les fils sont entrelacés, comme les fils de chaîne et les fils de trame d'un tissu.

Lorsque l'on dit que les fils sont orientés sensiblement parallèlement à un plan perpendiculaire à l'axe de rotation, cela signifie qu'ils forment un angle de 0° par rapport à ce plan, ou un angle très faible, tel que par exemple celui qui résulte de l'enroulement d'un fil ou d'une bandelette quelques fils d'un côté à l'autre de la partie centrale pour constituer la première nappe de sommet. Ces fils à 0° sont disposés au dessus de la carcasse à 90°, c'est-à-dire sous les nappes de sommet à angle + α, - β, et non pas par dessus les nappes à angle + α, - β, comme c'est le cas usuellement pour ces fils de renforcement dont le rôle est d'assurer un frettage du pneumatique, afin d'éviter que la centrifugation à haute vitesse ne le déforme de façon trop importante.

Quant aux nappes de sommet à angle + α, - β, il est indispensable que ces angles soient de valeur bien plus élevée que les valeurs usuelles qui sont comprises dans la gamme 10° - 30°.

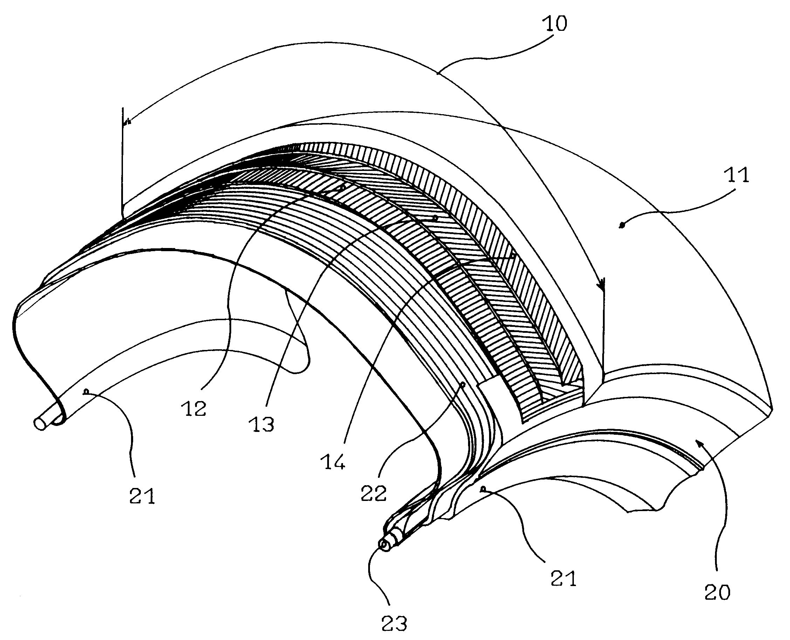

L'invention sera pafaitement comprise en consultant la suite de la description et le dessin joint où l'on voit un écorché de pneumatique selon l'invention.

On reconnaît sur le dessin le profil typique d'un pneumatique pour moto, dans lequel la partie centrale 10 incluant la bande de roulement 11 est très arrondie. Le pneumatique comporte deux flancs 20 terminés chacun par un bourrelet 21 destiné à être monté sur une jante. Le pneumatique est renforcé par une carcasse : dans cet exemple, on voit une nappe de carcasse radiale 22 allant d'un bourrelet 21 à l'autre, retournée dans chaque bourrelet autour d'une tringle 23. Mais il pourrait s'agir aussi de deux nappes croisées, dont l'angle descend par exemple jusgu'à une valeur de l'ordre de 65°.

On voit également les trois nappes de sommet 12, 13 et 14 constituant la ceinture. Chacune des nappes de sommet occupe axialement une largeur correspondant sensiblement à la largeur de la bande de roulement 11, avec une légère réduction de largeur d'une nappe à l'autre en partant de la nappe de carcasse et en allant vers la bande de roulement. Ainsi toutes les nappes de sommet contribuant aux caractéristiques fonctionnelles du pneumatique, quel que soit l'angle de carrossage sous lequel il est utilisé.

Un pneumatique selon cette invention a été soumis à différents tests et comparé à plusieurs autres pneumatiques de références, choisis en vertu de leurs excellentes performances dans l'un au moins des critères observés par les différents tests. Dans tous les cas de figures, la nappe de carcasse (NC) à 90° est en nylon. La nappe de sommet (NS) à O° est, lorsqu'elle est présente, réalisée en aramide, et les nappes de sommet à angle + α, - β sont, lorsqu'elles sont présentes, en aramide ou en nylon. La séquence de nappes de sommet est désignée NS₁, NS₂, NS₃.

Les différents critères observés aboutissent soit à une mesure, soit à une appréciation résultant en une note qui est d'autant plus basse que les performances se dégradent. Les essais ont toujours été conduits avec le même pneumatique avant lorsqu'il s'agit d'une évaluation sur moto, alors que les différents pneumatiques comparés sont montés à l'arrière. Cependant, il doit être noté que le pneumatique selon l'invention peut être utilisé indifféremment à l'avant et/ou à l'arrière. Les considérations permettant de choisir une paire de pneumatiques pour une moto sont par ailleurs connues et ne font pas partie de la présente invention.

| | Pneumatique | | | | Vitesse limite | Stabilité moto | | Motricité | Usure en courbe |
|---|---|---|---|---|---|---|---|---|---|
| | NC | NS₁ | NS₂ | NS₃ | | ligne droite | ligne courbe | | |
| 1 | 90° | 0° | | | 350 | 9 | 7 | 7 | 7 |
| 2 | 90° | 45° | -45° | O° | 270 | 8,5 | 8 | 8,5 | 7 |
| 3 | 90° | 0° | 45° | -45° | 306 | 9 | 8,5 | 9 | 10 |
| 4 | 90° | 0° | 30° | -30° | 270 | 9 | 8,5 | 8 | 8 |
| 5 | 90° | 25° | -25° | | 238 | 9 | 7,5 | 9 | 10 |

| | Usure en ligne droite | Stabilité du profil à la centrifugation |
|---|---|---|
| 1 | 9 | 10 |
| 2 | 9 | 10 |
| 3 | 10 | 10 |
| 4 | 9 | 10 |
| 5 | 7 | 7 |

Ces résultats montrent que, par rapport au pneumatique de référence, à carcasse à 90°, et à une seule nappe sommet à 0°, l'ajout de deux nappes à ± 45°, par dessus la nappe à 0° permet d'augmenter notablement la motricité, tout en n'ayant qu'une perte négligeable par ailleurs. Il faut noter en particulier que toute autre positionnement de la nappe à O° dégrade le résultat en vitesse limite, et que l'on ne peut trop s'écarter de l'angle de 45° pour les nappes de sommet 13 et 14, à savoir les nappes NS₂ et NS₃.

Dans un pneumatique, la mise en dérive provoque un cisaillement transversal de l'armature de sommet globale (carcasse et ceinture) et une flexion sur champ de ladite armature (cisaillement et flexion dans le plan de contact avec la route). Le déposant attribue les bonnes propriétés de l'architecture proposée au fait que la présence de fils à zéro degré garantit une grande rigidité à la flexion, et la présence de fils à ± 45° assure une grande rigidité au cisaillement. La présence de fils à zéro degré assure une bonne stabilité du profil (section radiale) du pneumatique, quelle que soit sa vitesse, ce qui est favorable à la maîtrise des poussées de carrossage du pneumatique moto.

La combinaison de fils à 0° et de fils à 45° permet donc de procurer une excellente rigidité de dérive par la contribution des uns à la rigidité de flexion sur champ du sommet, et des autres à la rigidité de cisaillement. L'importance de l'ordre de superposition des nappes est mis en évidence par les différences de performances entre les exemples 2 et 3. La couche de fils à 0°, habituellement utilisée pour brider l'ensemble de l'armature de renforcement, doit ici être utilisée entre la carcasse et les nappes de sommets à + α°, - β°. Cet angle α peut être utilisé comme paramètre de réglage de la rigidité : en s'éloignant de 45°, aussi bien vers le haut que vers le bas, il est possible de diminuer la rigidité de dérive sans devoir changer de type de câble, ou de densité en câbles de la nappe.

## Revendications

1. Pneumatique pour moto comportant une partie centrale (10) incluant la bande de roulement (11), et deux flancs (20) s'étendant chacun entre une extrémité de la partie centrale et un bourrelet (21) destiné à assurer l'accrochage sur la jante, ladite partie centrale, vue en coupe radiale, formant approximativement un arc de cercle, ledit pneumatique étant renforcé par une carcasse (22) s'étendant d'un bourrelet à l'autre, et par une ceinture (12,13,14) disposée dans la partie centrale, entre la carcasse et la bande de roulement, ladite ceinture comportant une ou plusieurs couches (12) de fils orientés sensiblement parallèlement à un plan perpendiculaire à l'axe de rotation et disposés, transversalement, sur toute la largeur de la bande de roulement, caractérisé en ce que la ceinture est constituée par, outre la ou lesdites couches de fils (12), et disposées radialement au dessus de celle(s)-ci, un renforcement (13,14) dont les fils forment un angle α par rapport à un plan perpendiculaire à l'axe de rotation du pneumatique, et un angle - β par rapport audit plan, lesdits angles α et β étant compris entre les valeurs 35° et 55°.

2. Pneumatique selon la revendication 1, caractérisé en ce que ledit renforcement est constitué par deux nappes (13,14) dont les fils de l'une forment l'angle α, et les fils de l'autre forment l'angle - β.

3. Pneumatique selon la revendication 1, caractérisé en ce que ledit renforcement est constitué par un tissu croisé.

## Claims

1. A motorcycle tyre comprising a central part (10) including the tread (11), and two sidewalls (20) each extending between one end of the central part and a bead (21) intended to ensure the hooking on the rim, said central part, viewed in radial section, forming approximately an arc of a circle, said tyre being reinforced by a casing (22) extending from one bead to the other, and by a belt (12,13,14) arranged in the central part, between the casing and the tread, said belt comprising one or more layers (12) of wires oriented substantially parallel to a plane perpendicular to the axis of rotation and arranged, crosswise, over the entire width of the tread, characterised in that the belt consists of, in addition to said layer or layers of wires (12), and arranged radially over it/them, a reinforcement (13,14) whose wires form an angle α in relation to a plane perpendicular to the axis of rotation of the tyre, and an angle - β in relation to said plane, said angles α and β being between the values 35° and 55°.

2. A tyre according to claim 1, characterised in that said reinforcement consists of two plies (13,14) the wires of one of which form the angle α, and the wires of the other form the angle - β.

3. A tyre according to claim 1, characterised in that said reinforcement consists of a twilled fabric.

## Patentansprüche

1. Motorradluftreifen mit einem zentralen Bereich (10), der den Laufstreifen (11) einschließt, und zwei Flanken (20), die jeweils zwischen einem Ende des zentralen Bereichs und einem zur Verankerung an der Felge vorgesehenen Wulst (21) verlaufen, wobei der zentrale Bereich in radialem Schnitt ungefähr einen Kreisbogen bildet und der Luftreifen durch eine von einem Wulst zum anderen verlaufende Karkasse (22) und einen im zentralen Bereich zwischen der Karkasse und dem Laufstreifen angeordneten Gürtel (12, 13, 14) verstärkt ist, wobei der Gürtel eine oder mehrere Schichten (12) von im wesentlichen parallel zu einer zur Drehachse senkrechten Ebene orientierten und in Querrichtung auf der ganzen Breite des Laufstreifens angeordneten Fäden umfaßt, **dadurch gekennzeichnet,** daß der Gürtel außer durch die Schicht oder Schichten von Fäden (12) durch eine radial oberhalb von dieser oder diesen angeordnete Verstärkung (13, 14) gebildet ist, deren Fäden einen Winkel α bezüglich einer zur Drehachse des Luftreifens senkrechten Ebene und einen Winkel - β bezüglich dieser Ebene bilden, wobei die Winkel α und β zwischen den Werten 35° und 55° liegen.

2. Luftreifen nach Anspruch 1,
dadurch gekennzeichnet, daß
die Verstärkung durch zwei Einlagen (13, 14) gebildet ist, wobei die Fäden der einen den Winkel α und die Fäden der anderen den Winkel - β bilden.

3. Luftreifen nach Anspruch 1,
dadurch gekennzeichnet, daß
die Verstärkung durch ein Gewebe mit gekreuzten Fäden gebildet ist.
